(19) **Europäisches Patentamt**

**European Patent Office**

**Office européen des brevets**

(11) Publication number: **0 326 165 B1**

# EUROPEAN PATENT SPECIFICATION

(45) Date of publication of patent specification: **31.03.93**  (51) Int. Cl.⁵: **C01B 31/30**

(21) Application number: **89101464.9**

(22) Date of filing: **27.01.89**

The file contains technical information submitted after the application was filed and not included in this specification

(54) **Iron Carbide fine particles and a process for preparing the same.**

(30) Priority: **27.01.88 JP 16652/88**

(43) Date of publication of application:
**02.08.89 Bulletin 89/31**

(45) Publication of the grant of the patent:
**31.03.93 Bulletin 93/13**

(84) Designated Contracting States:
**DE FR GB**

(56) References cited:
**EP-A- 0 227 104**
**US-A- 3 572 993**

**CHEMICAL ABSTRACTS, vol. 107, no. 4, 27 July 1987, page 591, column 2, abstract no. 32082x, Columbus, Ohio, US; & JP-A-62 58 604 (MITSUI TOATSU CHEMICALS) 14.03.1987**

**PATENT ABSTRACTS OF JAPAN, vol. 9, no. 66 (C-271)(1789), 26 March 1985; & JP-A-59 199 533 (DAIKIN KOGYO K.K.) 12.11.1984**
(73) Proprietor: **DAIKIN INDUSTRIES, LIMITED**
**Umeda Center Building, 4-12, Nakazaki-nishi 2-chome, Kita-ku**
**Osaka-shi, Osaka-fu(JP)**

(72) Inventor: **Shibuya, Yoshiyuki**
**12-17, Hanaten Higashi 1-chome Tsurumi-ku**
**Osaka-shi Osaka-fu(JP)**
Inventor: **Arase, Takuya**
**21-21, Hitotsuya 2-chome**
**Settsu-shi Osaka-fu(JP)**
Inventor: **Daimon, Shigeo**
**3-23-1105, Osaka 2-chome Tennoji-ku**
**Osaka-shi Osaka-fu(JP)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40 (DE)**

EP 0 326 165 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to iron carbide fine particles and a process for preparing the same.

It is known that acicular particles containing iron carbide are prepared by contacting acicular iron oxyhydroxide or acicular iron oxide with CO or a mixture of CO and $H_2$ at 250 to 400°C and that the resulting particles are stable chemically, have a high coercive force and are useful as a magnetic material for magnetic recording media. (For example, refer to JP-A-60-71509, 60-108309, 60-127212 and 60-155522.)

Since iron carbide fine particles are generally used as a coating-type magnetic recording medium, they are required to have pigment characteristics. However, iron carbide fine particles sometimes sinter or are deformed during the reduction or carburizing steps. Therefore, the starting particles are coated with a silicon compound or aluminum compound and then reduced and carburized. Although the particles are prevented from sintering or deformation, a large amount of carbon deposits on the resulting particles to cause deterioration of the magnetic characteristics.

In example 5 of EP-A-227 104 goethite was mixed with a nickel chloride solution and NaOH was added to render the slurry alkaline in order to deposit nickel hydroxide on the goethite. Thereafter water-glass was added. The resulting slurry was filtered and the particles were dried, followed by carburization and reduction in a CO stream, thus forming iron carbide particles coated both with a nickel and a silicon compound.

An object of the invention is to provide iron carbide fine particles and a process for preparing the same, the iron carbide fine particles being free from sintering and deformation and having excellent magnetic characteristics.

The above and other objects of the invention will become apparent from the following description.

The present invention provides iron carbide fine particles which have (i) a first coating layer of at least one metal compound selected from nickel compounds, copper compounds and manganese compounds and (ii) a second coating layer of a silicon compound and an aluminum compound on said first coating layer.

The present invention also provides a process for preparing iron carbide fine particles which comprises:

(a) coating an iron compound selected from iron oxyhydroxide fine particles and iron oxide fine particles first with at least one metal compound selected from nickel compounds, copper compounds and manganese compounds and then further with a silicon compound and an aluminum compound;

(b) optionally reducing the coated particles of step (a) with a reducing agent which does not contain carbon atoms;

(c) contacting the iron compound of step (a) or step (b) with a reducing-and-carburizing agent containing carbon atoms or a mixture thereof with a reducing agent which does not contain carbon atoms.

Examples of preferred iron oxyhydroxides are $\alpha$-FeOOH (goethite), $\beta$-FeOOH (akaganite) and $\gamma$-FeOOH (lepidocrosite). Examples of preferred iron oxides are $\alpha$-Fe$_2$O$_3$ (hematite), $\gamma$-Fe$_2$O$_3$ (maghemite) and Fe$_3$O$_4$ (magnetite).

$\alpha$-Fe$_2$O$_3$ or $\gamma$-Fe$_2$O$_3$ is, for example, any of those prepared by heating $\alpha$-FeOOH, $\beta$-FeOOH or $\gamma$-FeOOH at about 200 to about 350°C, followed by dehydrating it, $\alpha$-Fe$_2$O$_3$ or $\gamma$-Fe$_2$O$_3$ prepared by heating the resulting product further at about 350 to about 900°C to compact the crystals, and others. $\beta$-FeOOH is preferably treated with an aqueous solution of alkaline compound.

The above-mentioned Fe$_3$O$_4$ can be prepared by contacting an iron oxide other than Fe$_3$O$_4$ or iron oxyhydroxide with a reducing-and-carburizing agent containing carbon atoms or a reducing agent which does not contain carbon atoms, or a mixture thereof, although the Fe$_3$O$_4$ is not limited to one prepared by those methods. When a reducing-and-carburizing agent containing carbon atoms or a mixture thereof with a reducing agent which does not contain carbon atoms, is contacted with an iron oxyhydroxide or iron oxide other than Fe$_3$O$_4$ to prepare Fe$_3$O$_4$, the same contact conditions as those in the process (c) of the invention can also be employed except for the time condition In this case, the Fe$_3$O$_4$ formed can be subsequently held in contact with the gas under the same conditions as in the preceding reaction without any interruption to obtain the desired particles of the invention.

The starting iron oxyhydroxides or iron oxides can be those at least 3, preferably 3 to 20, in average axial ratio and having an average particle size (long axis) of up to 2 $\mu$m, preferably 0.1 to 2 $\mu$m, most preferably 0.1 to 1.0 $\mu$m. As will be described later, the particles produced are slightly smaller than, but almost unchanged from, the starting material in average axial ratio and in average particle size, so that the particles of the invention in general preferably have such sizes as already stated.

The iron oxyhydroxide or iron oxide to be used for the process for producing particles according to the invention may have added thereto a small amount or small amounts of a compound, such as oxide or carbonate of copper, magnesium, manganese or nickel; silicon oxide; potassium salt, sodium salt, etc.,

insofar as the starting material chiefly comprises an iron oxyhydroxide or iron oxide.

The starting iron oxyhydroxide preferably has a pH of at least 5 on the surface thereof as disclosed in JP-A-60-108309. In this case are produced particles having a higher coercive force. The starting iron oxyhydroxide having a pH of less than 5 can be used after it is increased to at least 5 in pH by contacting with an aqueous solution of an alkali compound (eg, sodium hydroxide, potassium hydroxide, ammonium hydroxide). Further, alkali-treated iron oxide can also be used. The starting material can be treated with an alkaline compound by contacting the material with an aqueous solution of sodium hydroxide, potassium hydroxide, ammonium hydroxide and like alkaline compound (eg, with an aqueous solution having a pH of at least 8, preferably at least 10), stirring for 30 minutes to 1 hour when required, filtering the mixture and drying.

In the present invention, the surface pH is defined as a value which is obtained by boiling 5 g of a sample in 100 ml of distilled water for one hour, cooling the solution to room temperature, allowing the same to stand for one hour and measuring the pH of the resulting supernatant with a pH meter.

In the present invention, the particles of the above iron oxyhydroxide or iron oxide (hereinafter both compounds may be referred to as "iron compound") is coated with at least one metal compound selected from nickel compounds, copper compounds and manganese compounds and then further coated with silicon compound and aluminum compound.

Examples of nickel compounds are nickel chloride, nickel nitrate, nickel sulfate, nickel bromide and nickel acetate. Copper compounds include copper (II) sulfate, copper nitrate, copper (II) chloride, copper (II) bromide and copper acetate. Manganese compounds include manganese sulfate, manganese nitrate, manganese chloride and manganese bromide.

Further, examples of silicon compounds are sodium orthosilicate, sodium metasilicate, potassium metasilicate and water glass, which includes various compositions. Aluminum compounds include aluminum sulfate, aluminum nitrate, aluminum chloride, various aluminum alums, sodium aluminate and potassium aluminate.

Each of these compounds can be coated on the surface of the iron compound, for example, by adding an aqueous solution of the above compound to a dispersion of the iron compound and then neutralizing the mixture. After the neutralization in the first coating step, it is not particularly necessary to filter or dry the reaction mixture. However, the filtration and drying are required after the neutralization in the second coating step. The amount for coating of the metal compound is 0.01 to 10% by weight in terms of the atom of the metal based on the weight of the iron oxyhydroxide or iron oxide in terms of $Fe_2O_3$. The amount for coating of the silicon compound and aluminum compound is 0.01 to 10% by weight in terms of silicon atom and aluminum atom based on the weight of the iron oxyhydroxide or iron oxide in terms of $Fe_2O_3$. Then the obtained iron compound fine particles are optionally contacted with a reducing agent which does not contain carbon atoms.

In the invention, typical examples of the reducing agent which does not contain carbon atoms are $H_2$, $NH_2NH_2$, etc.

As the reducing-and-carburizing agent containing carbon atoms, at least one of the following compounds can be used.

① CO

② aliphatic, linear or cyclic, saturated or unsaturated hydrocarbons such as methane, propane, butane, cyclohexane, methylcyclohexane, acetylene, ethylene, propylene, butadiene, isoprene, town gas, etc.

③ aromatic hydrocarbons such as benzene, toluene, xylene, alkylated or alkenylated derivatives thereof having a boiling point up to 150°C.

④ aliphatic alcohols such as methanol, ethanol, propanol, cyclohexanol, etc.

⑤ esters such as methyl formate, ethyl acetate and like esters having a boiling point up to 150°C

⑥ ethers such as lower alkyl ethers vinyl ethers and like ethers having a boiling point up to 150°C

⑦ aldehydes such as formaldehyde, acetaldehyde and like aldehydes having a boiling point up to 150°C

⑧ ketones such as acetone, methyl ethyl ketone, methyl isobutyl ketone and like ketones having a boiling point up to 150°C

Particularly preferable reducing-and-carburizing agents containing carbon atoms are CO, $CH_3OH$, $HCOOCH_3$ and saturated or unsaturated aliphatic hydrocarbons having 1 to 5 carbon atoms.

In the optional process step (b) of the invention, the reducing agent which does not contain carbon atoms can be used as it is or in diluted form. Examples of diluents are $N_2$, $CO_2$, argon, helium, etc. The dilution ratio is suitably selected but is preferably up to about 10:1 (by volume). The contacting temperature, contacting time, gas flow rate and other conditions depend, for example, on the production history, average axial ratio, average particle size and specific surface area of the iron compound. The preferred contacting temperature is about 200 to about 700°C, preferably about 300 to about 400°C. The preferred contacting time is about 0.5 to about 6 hours. The preferred gas flow rate (excluding diluent) is about 1 to about 1000 ml S.T.P./min per gram of the starting iron compound. The contacting pressure inclusive of that of the diluent is usually 0.1 to 0.2 MPa although not particularly limitative.

In the process step (c) of the invention, the reducing-and-carburizing agent containing carbon atoms or a mixture thereof with the reducing agent which does not contain carbon atoms can be used as it is or in diluted form. When the mixture is used, the mixing ratio of the reducing-and-carburizing agent to the reducing agent is suitably selected but is preferably up to 1:1 to 5:1 by volume. Contact conditions are also suitably selected but the preferred contacting temperature is about 250 to about 400°C, more preferably about 300 to about 400°C. The preferred contacting time is about 0.5 to 6 hours when the contact in step (b) is conducted, and about 1 to about 12 hours when the contact in step (b) is not conducted. The preferred gas flow rate (excluding diluent) is about 1 to about 1000 ml S.T.P./min per gram of the starting iron compound. The contacting pressure inclusive of that of the diluent is usually 0.1 to 0.2 MPa although not particularly limitative.

The particles obtained by the present invention are in the form of generally uniform particles when observed under an electron microscope. The particles are present as primary particles and have the same particulate form as the starting particles of iron oxyhydroxide and iron oxide. The particles obtained by the process are found to contain carbon by elementary analysis and to contain an iron carbide by its X-ray diffraction pattern, which exhibits plane spacings at 0.228 nm (2.28Å), 0.220 nm (2.20Å), 0.208 nm (2.08Å), 0.205 nm (2.05Å) and 0.192 nm (1.92Å). Such pattern corresponds to $Fe_5C_2$. The iron carbide component of the present invention chiefly comprises $Fe_5C_2$, with $Fe_2C$, $Fe_{20}C_9$ ($Fe_{2.2}C$), $Fe_3C$, etc. present conjointly therewith in some cases. It is suitable to represent the iron carbide as FexC ($2 \leq x < 3$).

The iron carbide fine particles of the present invention are useful as magnetic material for magnetic recording as is apparent from the foregoing characteristics, etc., while the use thereof is not limited thereto. For example, the particulate material is usable as a catalyst for preparing lower aliphatic hydrocarbons from CO and $H_2$.

In the present invention, it is possible to produce iron carbide fine particles which are free from sintering and deformation, have excellent magnetic characteristics and have a small amount of deposited carbon.

The invention will be described below in detail by showing reference examples, an example and comparison examples.

In the following examples, characteristics, etc. are determined in the methods described below.

(1) Magnetic characteristics.

Determined in the following method unless otherwise specified.

Coercive force (Hc, Oe), saturation magnetization ($\sigma s$, e.m.u./g) and square ratio (Sq) are measured in a magnetic field with a strength of 5 kOe, using a gauss meter equipped with a Hall-effect element and a sample with a packing ratio of 0.2.

(2) Elementary analysis for C, H and N

The sample is subjected to elementary analysis in the conventional method using an apparatus (MT2 CHN CORDER, Yanaco, Yanagimoto Mfg. Co., Ltd.) with passage of oxygen (helium carrier) at 900°C.

Reference Example 1

Eight grams (7.2g in terms of $Fe_2O_3$) of goethite particles, 0.5 $\mu m$ in average particle size and 12 in average axial ratio, were dispersed in 0.5ℓ of pure water. The dispersion was adjusted to pH 5 with an aqueous solution of 1N-HCℓ and thereto was added a specific amount of the firstly coated metal compound listed in Table 1. The mixture was stirred and adjusted to pH 9.0 with 1N-NaOH to perform the coating of the metal compound. Then the mixture was adjusted to pH 10 with 1N-NaOH and thereto was added a specific amount of the secondly coated compound listed in Table 1. The mixture was stirred and adjusted to pH 7.0 with an aqueous solution of 0.5N-HCℓ to have the compound coated. The particles were washed with water, filtered and dried to obtain goethite particles coated with two kinds of compounds.

Reference Example 2

The goethite particles obtained in Reference Example 1 were heated and dehydrated in air at 500°C for 30 minutes to obtain $\alpha$-$Fe_2O_3$ which was coated firstly with the metal compound and secondly with the compound listed in Table 1.

Comparison Examples 1 and 2

Two grams of each of the goethite particles or $\alpha$-$Fe_2O_3$ particles obtained in Reference Example 1 or 2 were contacted with CO at 380°C for 3 hours at a flow rate of 500 m$\ell$/min. The particles were thereafter allowed to cool to room temperature to obtain a black powder.

The X-ray diffraction pattern of the product matched that of $Fe_5C_2$ Iron Carbide on ASTM X-Ray Powder Data File 20-509. The magnetic characteristics are given in Table 2.

Reference Example 3

Goethite particles coated with specific amounts of copper compound and aluminum compound listed in Table 1 were obtained in the same manner as in Reference Example 1 except that cupric chloride ($CuCl_2$ • $2H_2O$) was used in place of nickel chloride. The above goethite particles were heated in air at 500°C for 30 minutes to obtain $\alpha$-$Fe_2O_3$ particles.

Comparison Example 3

Two grains of $\alpha$-$Fe_2O_3$ particles prepared in Reference Example 3 were contacted with hydrogen at 500°C for 2 hours at a flow rate of 500 m$\ell$/min. and then were contacted with CO at 400°C for 3 hours at a flow rate of 500 m$\ell$/min. The particles were thereafter allowed to cool to room temperature to obtain a black powder.

Comparison Example 4

Two grams of $\alpha$-$Fe_2O_3$ particles prepared in Reference Example 3 were contacted with CO at 380°C for 3 hours at a flow rate of 500 m$\ell$/min. The particles were thereafter allowed to cool to room temperature to obtain a black powder.

Reference Example 4

Goethite particles coated with nickel compound and silicon compound were obtained in the same manner as in Reference Example 1 except that 0.25g of sodium orthosilicate ($Na_4SiO_4$) were added in place of sodium aluminate. The above goethite particles were heated in air at 500°C for 30 minutes to obtain $\alpha$-$Fe_2O_3$ particles.

Comparison Example 5

Two grains of $\alpha$-$Fe_2O_3$ particles prepared in Reference Example 4 were contacted with CO at 380°C for 3 hours at a flow rate of 500 m$\ell$/min. The particles were thereafter allowed to cool to room temperature to obtain a black powder.

Reference Example 5

Goethite particles coated with copper compound and silicon compound were obtained in the same manner as in Reference Example 1 except that 0.04g of copper chloride were added in place of nickel chloride and 0.25g of sodium orthosilicate ($Na_4SiO_4$) was added in place of sodium aluminate. The above goethite particles were heated in air at 500°C for 30 minutes to obtain $\alpha$-$Fe_2O_3$ particles.

Comparison Example 6

Two grams of $\alpha$-$Fe_2O_3$ particles prepared in Reference Example 5 were contacted with CO at 380°C for 3 hours at a flow rate of 500 m$\ell$/min. The particles were thereafter allowed to cool to room temperature to obtain a black powder.

Reference Example 6

Goethite particles coated with manganese compound and aluminum compound were obtained in the same manner as in Reference Example 1 except that 0.9g of manganese chloride was used in place of nickel chloride. The above goethite particles were heated in air at 500°C for 30 minutes to obtain $\alpha$-Fe$_2$O$_3$ particles.

Comparison Example 7

Two grams of $\alpha$-Fe$_2$O$_3$ particles prepared in Reference Example 6 were contacted with CO at 380°C for 3 hours at a flow rate of 500 mℓ/min. The particles were thereafter allowed to cool to room temperature to obtain a black powder.

Reference Example 7

Goethite particles coated with nickel compound, aluminum compound and silicon compound were obtained in the same manner as in Reference Example 1 except that 0.06g of sodium aluminate and 0.12g of sodium orthosilicate were added in place of 0.12g of sodium aluminate. The above goethite particles were heated in air at 500°C for 30 minutes to obtain $\alpha$-Fe$_2$O$_3$ particles.

Example 1

Two grams of $\alpha$-Fe$_2$O$_3$ particles prepared in Reference Example 7 were contacted with CO at 380°C for 3 hours at a flow rate of 500 mℓ/min. The particles were thereafter allowed to cool to room temperature to obtain a black powder.

Comparison Example 8

A black powder was obtained in the same manner as in Comparison Example 1 with the exception of using goethite particles which were not coated with nickel compound or aluminum compound.

Comparison Example 9

A black powder was obtained in the same manner as in Comparison Example 2 except that the coating of nickel compound was omitted.

Comparison Example 10

A black powder was obtained in the same manner as in Comparison Example 2 except that the coating of aluminum compound was omitted.

6

Table 1

| Ref. Ex. | firstly coated metal compound | | secondly coated compound | | dehyd-ration (※1) | coated starting iron compound |
|---|---|---|---|---|---|---|
| | kind | amount (g) (in terms of atom) | kind | amount (g) (in terms of atom) | | |
| 1 | nickel chloride ($NiCl_2 \cdot 6H_2O$) | 0.054 (0.013) | sodium aluminate ($NaAlO_2$) | 0.12 (0.039) | × | goethite particles coated with Ni and Al compounds |
| 2 | nickel chloride ($NiCl_2 \cdot 6H_2O$) | 0.054 (0.013) | sodium aluminate ($NaAlO_2$) | 0.12 (0.039) | ○ | $\alpha-Fe_2O_3$ particles coated with Ni and Al compounds |
| 3 | cupric chloride ($CuCl_2 \cdot 2H_2O$) | 0.04 (0.010) | sodium alminate ($NaAlO_2$) | 0.12 (0.039) | ○ | $\alpha-Fe_2O_3$ particles coated with Cu and Al compounds |
| 4 | nickel chloride ($NiCl_2 \cdot 6H_2O$) | 0.054 (0.013) | sodium orthosilicate ($Na_2SiO_4$) | 0.25 (0.081) | ○ | $\alpha-Fe_2O_3$ particles coated with Ni and Si compounds |
| 5 | cupric chloride ($CuCl_2 \cdot 2H_2O$) | 0.04 (0.010) | sodium orthosilicate ($Na_2SiO_4$) | 0.25 (0.081) | ○ | $\alpha-Fe_2O_3$ particles coated with Cu and Si compounds |

EP 0 326 165 B1

EP 0 326 165 B1

Table 1 (continued)

| Ref. Ex. | firstly coated metal compound | | secondly coated compound | | dehyd— ration (※1) | coated starting iron compound |
|---|---|---|---|---|---|---|
| | kind | amount (g) (in terms of atom) | kind | amount (g) (in terms of atom) | | |
| 6 | manganese chloride (MnCl₂ · 4 H₂O) | 0.9 (0.250) | sodium aluminate (NaAlO₂) | 0.12 (0.039) | ◯ | α—Fe₂O₃ particles coated with Mn and Al compounds |
| 7 | nickel chloride (NiCl₂ · 6 H₂O) | 0.054 (0.013) | sodium aluminate (NaAlO₂) sodium orthosilicate (Na₂SiO₄) | 0.06 (0.020) 0.13 (0.025) | ◯ | α—Fe₂O₃ particles coated with Ni, Al and Si compounds |

(※1) ◯ : goethite particles are dehydrated

X : goethite particles are not dehydrated

Table 2

| | iron compound | coated metal | coated amount (wt%) | Hc (Oe) | σs (emu/g) | Sq |
|---|---|---|---|---|---|---|
| Comp.Ex. 1 | α-FeOOH | Ni/Aℓ | 0.18/0.54 | 980 | 100 | 0.53 |
| 2 | α-Fe₂O₃ | Ni/Aℓ | 0.18/0.54 | 1030 | 95 | 0.56 |
| 3 | α-Fe₂O₃ | Cu/Aℓ | 0.14/0.54 | 980 | 97 | 0.53 |
| 4 | α-Fe₂O₃ | Cu/Aℓ | 0.14/0.54 | 960 | 96 | 0.54 |
| 5 | α-Fe₂O₃ | Ni/Si | 0.18/0.71 | 1010 | 95 | 0.55 |
| 6 | α-Fe₂O₃ | Cu/Si | 0.14/0.71 | 950 | 94 | 0.54 |
| 7 | α-Fe₂O₃ | Mn/Aℓ | 3.47/0.54 | 960 | 95 | 0.54 |
| Ex. 8 | α-FeOOH | Ni/Si+Aℓ | 0.18/0.62 | 1100 | 97 | 0.56 |
| Com.Ex. 1 | α-FeOOH | none | — | 800 | 100 | 0.49 |
| 2 | α-Fe₂O₃ | Aℓ | 0.54 | 860 | 79 | 0.50 |
| 3 | α-Fe₂O₃ | Ni | 0.18 | 840 | 87 | 0.49 |

## Claims

1. Iron carbide fine particles which have (i) a first coating layer of at least one metal compound selected from nickel compounds, copper compounds and manganese compounds and (ii) a second coating layer of a silicon compound and an aluminum compound on said first coating layer.

2. A process for preparing iron carbide fine particles, comprising:
   (a) coating an iron compound selected from iron oxyhydroxide fine particles and iron oxide fine particles first with at least one metal compound selected from nickel compounds, copper compounds and manganese compounds and then further with a silicon compound and an aluminum compound;

(b) optionally reducing the coated particles of step (a) with a reducing agent which does not contain carbon atoms;

(c) contacting the coated iron compound of step (a) or step (b) with a reducing-and-carburizing agent containing carbon atoms or a mixture thereof with a reducing agent which does not contain carbon atoms.

3. A process as defined in claim 2 wherein the coated iron compound of step (a) is heated at about 200 to 700°C.

4. A process as defined in claim 2 wherein the contacting temperature in step (b) is about 200 to 700°C and the contacting temperature in step (c) is about 250 to 400°C.

5. A process as defined in any one of claims 2 to 4 wherein the amount for coating of the metal compound(s) in step (a) is 0.01 to 10% by weight in terms of the atom(s) of the metal(s) based on the weight of the iron oxyhydroxide or iron oxide in terms of $Fe_2O_3$.

6. A process as defined in any one of claims 2 to 5 wherein the amount for coating of silicon compound and aluminum compound in step (a) is 0.01 to 10% by weight in terms of silicon plus aluminum atoms based on the weight of the iron oxyhydroxide or iron oxide in terms of $Fe_2O_3$.

**Patentansprüche**

1. Eisencarbid-Feinteilchen, die (i) eine erste Überzugsschicht aus mindestens einer Metallverbindung, ausgewählt aus Nickelverbindungen, Kupferverbindungen und Manganverbindungen, und (ii) eine zweite Überzugsschicht aus einer Siliciumverbindung und einer Aluminiumverbindung auf der ersten Überzugsschicht aufweisen.

2. Verfahren zur Herstellung von Eisencarbid-Feinteilchen, umfassend:

(a) das Beschichten einer Eisenverbindung, ausgewählt aus Eisenoxyhydroxid-Feinteilchen und Eisenoxid-Feinteilchen zunächst mit mindestens einer Metallverbindung, ausgewählt aus Nickelverbindungen, Kupferverbindungen und Manganverbindungen, und dann weiter mit einer Siliciumverbindung und einer Aluminiumverbindung;

(b) gegebenenfalls Reduzieren der beschichteten Teilchen von Schritt (a) mit einem Reduktionsmittel, das keine Kohlenstoffatome enthält;

(c) Inkontaktbringen der beschichteten Eisenverbindung von Schritt (a) oder Schritt (b) mit einem Reduktions-und-Aufkohlungsmittel, welches Kohlenstoffatome enthält, oder einer Mischung davon mit einen Reduktionsmittel, welches keine Kohlenstoffatome enthält.

3. Verfahren nach Anspruch 2, worin die beschichtete Eisenverbindung von Schritt (a) auf etwa 200 bis 700°C erhitzt wird.

4. Verfahren nach Anspruch 2, worin die Kontakttemperatur in Schritt (b) etwa 200 bis 700°C und die Kontakttemperatur in Schritt (c) etwa 250 bis 400°C beträgt.

5. Verfahren nach einem der Ansprüche 2 bis 4, worin die Beschichtungsmenge der Metallverbindung(en) in Schritt (a) 0,01 bis 10 Gewichtsprozent, ausgedrückt als Atom(e) der Metall(e), bezogen auf das Gewicht des Eisenoxyhydroxids oder Eisenoxids, ausgedrückt als $Fe_2O_3$, beträgt.

6. Verfahren nach einem der Ansprüche 2 bis 5, worin die Beschichtungsmenge der Siliciumverbindung und Aluminiumverbindung in Schritt (a) 0,01 bis 10 Gewichtsprozent, ausgedrückt als Silicium- plus Aluminiumatome, bezogen auf das Gewicht des Eisenoxyhydroxids oder Eisenoxids, ausgedrückt als $Fe_2O_3$, beträgt.

**Revendications**

1. Particules fines de carbure de fer, qui ont (i) une première couche de revêtement d'au moins un composé métallique choisi parmi les composés du nickel, les composés du cuivre et les composés du manganèse et (ii) une seconde couche de revêtement d'un composé du silicium et d'un composé d'aluminium sur cette première couche de revêtement.

2. Procédé pour préparer des particules fines de carbure de fer, comprenant :
   (a) le revêtement d'un composé du fer choisi parmi des particules fines d'oxyhydroxyde de fer et des particules fines d'oxyde de fer, d'abord avec au moins un composé métallique choisi parmi les composés du nickel, les composés du cuivre et les composés du manganèse et ensuite de plus, avec un composé du silicium et un composé d'aluminium;
   (b) la réduction éventuelle des particules revêtues de l'étape (a) avec un agent réducteur qui ne contient pas d'atomes de carbone;
   (c) la mise en contact du composé de fer revêtu de l'étape (a) ou de l'étape (b) avec un agent de réduction et de carburation contenant des atomes de carbone ou un mélange de celui-ci avec un agent réducteur qui ne contient pas d'atomes de carbone.

3. Procédé suivant la revendication 2, dans -lequel le composé de fer revêtu de l'étape (a) est chauffé entre environ 200 et 700°C.

4. Procédé suivant la revendication 2, dans lequel la température de mise en contact dans l'étape (b) est d'environ 200 à 700°C et la température de mise en contact dans l'étape (c) est d'environ 250 à 400°C.

5. Procédé suivant l'une quelconque des revendications 2 à 4, dans lequel la quantité du revêtement du ou des composés métalliques dans l'étape (a) est de 0,01 à 10% en poids en termes d'atomes du ou des métaux par rapport au poids de l'oxyhydroxyde de fer ou de l'oxyde de fer en termes de $Fe_2O_3$.

6. Procédé suivant l'une quelconque des revendications 2 à 5, dans lequel la quantité du revêtement de composé de silicium et de composé d'aluminium dans l'étape (a) est de 0,01 à 10% en poids en termes d'atomes de silicium plus aluminium par rapport au poids de l'oxyhydroxyde de fer ou de l'oxyde de fer en termes de $Fe_2O_3$.